# EUROPEAN PATENT APPLICATION

(11) **EP 4 645 953 A1**
(43) Date of publication of application: **05.11.2025**
(21) Application number: 24749703.5
(22) Date of filing: 31.01.2024
(51) Int. Cl.: H04W 36/00, H04B 7/185

(54) **COMMUNICATION METHOD AND COMMUNICATION APPARATUS**

(30) Priority: 01.02.2023 CN 202310129912
(71) Applicant: Huawei Technologies Co., Ltd., Shenzhen, Guangdong 518129 (CN)
(72) Inventor: QIAO, Yunfei, Shenzhen, Guangdong 518129 (CN); WANG, Yu, Shenzhen, Guangdong 518129 (CN); CHEN, Ying, Shenzhen, Guangdong 518129 (CN)
(74) Representative: Pfenning, Meinig & Partner mbB
(86) International application number: PCT/CN2024/074889
(87) International publication number: WO 2024/160224

(57) **Abstract**

This application provides a communication method and a communication apparatus. The communication method includes: A terminal device receives first information broadcast or multicast in a first cell by a first satellite base station, where the first information indicates a timing offset in terms of time between a second cell and the first cell, and the second cell is a neighboring cell of the first cell. The terminal device determines, based on the timing offset, a target timing advance command TA corresponding to the second cell. In the communication method, a handover delay of the terminal device can be reduced, and signaling overheads of a communication system can be further reduced.

## Description

This application claims priority to Chinese Patent Application No. 202310129912.8, filed with the China National Intellectual Property Administration on February 01, 2023, and entitled "COMMUNICATION METHOD AND COMMUNICATION APPARATUS", which is incorporated herein by reference in its entirety.

### TECHNICAL FIELD

This application relates to the field of communication technologies, and in particular, to a communication method and a communication apparatus.

### BACKGROUND

One of development focuses in the field of communication systems is global mobile communication, and satellite communication is an important part of the global mobile communication. In satellite communication scenarios, due to high-speed movement of satellites, user equipment (user equipment, UE) in a connected mode needs to be frequently handed over between different satellite cells, to ensure service continuity.

However, a person skilled in the art finds that a problem of high signaling overheads of a communication system exists in the foregoing handover process.

### SUMMARY

This application provides a communication method and a communication apparatus, to reduce signaling overheads of a communication system during handover.

According to a first aspect, this application provides a communication method, applied to a terminal device. The terminal device accesses a first cell of a first satellite base station. The method includes: receiving first information broadcast or multicast by the first satellite base station in the first cell, where the first information indicates a timing offset in terms of time between a second cell and the first cell, and the second cell is a neighboring cell of the first cell; and determining, based on the timing offset, a target timing advance command TA corresponding to the second cell.

In this embodiment, the first cell is a cell (that is, the first cell is a cell serving the terminal device) accessed by the terminal device, and a satellite base station including the first cell is referred to as the first satellite base station.

In this embodiment, the first satellite base station is also referred to as a source satellite base station, and the first cell is also referred to as a source satellite cell. This does not constitute a limitation on this application.

In this embodiment, the second cell is a cell neighboring to the first cell, that is, the neighboring cell of the first cell, and a satellite base station including the second cell is referred to as a second satellite base station.

In this embodiment, the second satellite base station is also referred to as a target satellite base station, and the second cell is also referred to as a target satellite cell. This does not constitute a limitation on this application.

In this embodiment, the first satellite base station (the source satellite base station) sends, in the first cell (the source satellite cell) in a broadcast or multicast manner, the first information to the terminal device accessing the first cell. The first information indicates the timing offset in terms of time between the second cell and the first cell. Correspondingly, the terminal device determines, based on the timing offset in terms of time between the second cell and the first cell, the target TA corresponding to the second cell.

In this embodiment, the timing offset is a downlink synchronization offset, or may be referred to as downlink timing deviation/a downlink timing offset.

The target TA corresponding to the second cell may be understood as a TA required when the terminal device randomly accesses the second cell during handover from the first cell to the second cell.

It may be understood that, in this embodiment, the terminal device determines, based on the timing offset that is between the second cell and the first cell and that is indicated by the first information broadcast or multicast by the first satellite base station, the target TA required when the terminal device needs to be handed over from the first cell to the second cell (that is, the terminal device does not determine the target TA in a process of performing the handover from the first cell to the second cell). Therefore, when it is determined that the handover from the first cell to the second cell needs to be performed, the terminal device may directly send an MSG3 to the second cell based on the target TA obtained in advance, to complete a subsequent random access procedure.

That the terminal device directly sends the MSG3 to the second cell based on the target TA obtained in advance includes: The terminal device obtains a target uplink grant resource used when the terminal device sends the MSG3 to the second cell; and sends the MSG3 to the second cell based on the target TA and the target uplink grant resource.

It may be understood that, in this embodiment, before performing the handover from the first cell to the second cell, the terminal device may obtain, in advance, the target TA and the target uplink grant resource that are corresponding to the second cell. Therefore, when performing the handover, the terminal device may not execute an MSG1 or an MSG2, but directly initiate the MSG3 by using the target TA and the target uplink grant resource of the second cell that are obtained, thereby reducing a delay of the process in which the terminal device is handed over from the first cell to the second cell.

In addition, it may be further understood that the following scenario may exist: For a plurality of terminal devices within a geographical range, when the plurality of terminal devices are handed over from the first cell to the second cell, downlink timing offsets are the same. Therefore, in this embodiment, the first satellite base station sends, to the terminal device in a broadcast or multicast manner instead of a unicast manner, the downlink timing offset that is in terms of time between the second cell and the first cell and that is indicated by the first information, thereby further reducing signaling overheads.

With reference to the first aspect, in a possible implementation, the first information includes at least one of the following information: the timing offset, an identifier of the second cell, a moment at which the first satellite base station sends the first information, and validity duration of the first information.

It is noted that a specific form of the unit of the timing offset is not limited in this application.

For example, in a possible implementation, a unit of the timing offset is any one of the following: a second, a millisecond, a microsecond, a frame, a subframe, a slot, and a sampling point.

With reference to the first aspect, in a possible implementation, a satellite base station to which the second cell belongs is the first satellite base station.

That is, the satellite base stations to which the second cell and the first cell belong are the same. It may be understood that, in the scenario, when the terminal device needs to be handed over from the first cell to the second cell, an intra-satellite handover is to be performed.

With reference to the first aspect, in a possible implementation, a satellite base station to which the second cell belongs is a second satellite base station different from the first satellite base station.

That is, the satellite base stations to which the second cell and the first cell belong are the same. It may be understood that, in the scenario, when the terminal device needs to be handed over from the first cell to the second cell, an intra-satellite handover is to be performed.

According to a second aspect, this application provides a communication method, applied to a first satellite base station. The method includes: broadcasting or multicasting first information in a first cell of the first satellite base station, where the first information indicates a timing offset in terms of time between a second cell and the first cell, and the second cell is a neighboring cell of the first cell.

With reference to the second aspect, in a possible implementation, the first information includes at least one of the following information: the timing offset, an identifier of the second cell, a moment at which the first satellite base station sends the first information, and validity duration of the first information.

With reference to the second aspect, in a possible implementation, a unit of the timing offset is any one of the following: a second, a millisecond, a microsecond, a frame, a subframe, a slot, and a sampling point.

With reference to the second aspect, in a possible implementation, a satellite base station to which the second cell belongs is the first satellite base station.

With reference to the second aspect, in a possible implementation, a satellite base station to which the second cell belongs is a second satellite base station different from the first satellite base station.

According to a third aspect, this application provides a communication method, applied to a terminal device. The terminal device accesses a first cell of a first satellite base station. The method includes: obtaining a target random access channel RACH resource used when the terminal device initiates a message 1 MSG1 to a second cell; initiating the MSG1 to the second cell on the target RACH resource; receiving a message 2 MSG2 sent in response to the MSG1 by a second satellite base station to which the second cell belongs, where the MSG2 includes a target timing advance command TA and a target uplink grant resource that are used when the terminal device sends an MSG3 to the second cell; and when it is determined that handover from the first cell to the second cell needs to be performed, sending the MSG3 to the second cell based on the target TA and the target uplink grant resource.

In this embodiment, a process in which the terminal device initiates the MSG1 to the second cell and receiving the MSG2 sent in response to the MSG1 by the second satellite base station to which the second cell belongs is executed before the terminal device determines that the handover from the first cell to the second cell needs to be performed (that is, the terminal device does not determine, in a process of performing the handover from the first cell to the second cell, the target timing advance command TA and the target uplink grant resource that are used when the MSG3 is sent). Therefore, when the terminal device determines that the handover from the first cell to the second cell needs to be performed, because a serving satellite base station obtains, in advance, the target TA and the target uplink grant resource that are required when the MSG3 is sent to the second cell, the process of the MSG1 and the MSG2 may be ignored and the MSG3 may be directly sent to the second cell, thereby reducing a delay.

With reference to the third aspect, in a possible implementation, obtaining the target RACH resource used when the terminal device initiates the message 1 MSG1 to the second cell includes: receiving second information broadcast or multicast by the first satellite base station, where the second information indicates the target RACH resource used when the terminal device initiates the MSG1 to the second cell; and initiating the MSG1 to the second cell on the target RACH resource includes: receiving third information sent by the first satellite base station, where the third information indicates the terminal device to initiate the MSG1 in the second cell; and initiating the MSG1 to the second cell on the target RACH resource based on an indication of the third information.

During specific implementation, the third information may be carried in a downlink control information (downlink control indicator, DCI). Alternatively, in other words, the first satellite base station may trigger the terminal device to initiate the MSG1 to the second cell through a physical downlink control channel (physical downlink control channel, PDCCH).

For example, a new field "Cellindex_bitmap" may be added to the DCI to indicate which cells the terminal device is allowed to initiate the MSG1 to. A quantity of bits in Cellindex_bitmap is equal to a quantity of configured neighboring cells. If all 0s are present, it indicates that the MSG1 is initiated in a current serving cell.

Optionally, in the implementation, the DCI used to trigger the terminal device to initiate the MSG1 to the second cell is scrambled by a group radio network temporary identifier (group radio network temporary identifier, G-RNTI). A serving cell pre-configures a group-RNTI for the terminal device, so that the DCI can trigger, at a time, users in a group to initiate random access, thereby reducing signaling overheads of a one-to-one DCI notification. In addition, it should be understood that, in the scenario, after receiving the DCI scrambled by the G-RNTI, terminal devices belonging to a same group initiate contention-based random access on an RO of a designated cell.

With reference to the third aspect, in a possible implementation, the second information includes at least one of the following information: the target RACH resource used when the terminal device initiates the MSG1 to the second cell, an identifier of the second cell, a moment at which the first satellite base station sends the second information, and validity duration of the second information.

With reference to the third aspect, in a possible implementation, the second satellite base station broadcasts fourth information in the second cell by using a system message, where the fourth information indicates, to the terminal device located in the second cell, a RACH resource that is incapable of being used to send the MSG1 within a target time period, or the fourth information indicates, to the terminal device located in the second cell, a probability of a RACH resource used to send the MSG1 within a target time period.

Alternatively, in other words, in the implementation, the second satellite base station may further broadcast, to the terminal device in the second cell by using a system message, which RACH resources are incapable of being used to initiate the MSG1 within a target time period, to avoid conflict with the terminal device in the serving cell during initiation of the MSG1. The target time period may be equivalent to the validity duration described above. In addition, an indication delivered in the second cell by the second satellite base station may be parameter information such as a probability and a weight of indicating the terminal device in the second cell to use a RACH resource.

With reference to the third aspect, in a possible implementation, the second satellite base station to which the second cell belongs is the first satellite base station.

That is, the satellite base stations to which the second cell and the first cell belong are the same. It may be understood that, in the scenario, when the terminal device needs to be handed over from the first cell to the second cell, an intra-satellite handover is to be performed.

With reference to the third aspect, in a possible implementation, the second satellite base station to which the second cell belongs is a satellite base station different from the first satellite base station.

According to a fourth aspect, this application provides a communication method, applied to a first satellite base station. The method includes: broadcasting or multicasting second information in a first cell of the first satellite base station, where the second information indicates a target random access channel RACH resource used when a terminal device initiates an MSG1 to a second cell; and sending third information to the terminal device in the first cell of the first satellite base station, where the third information indicates the terminal device to initiate the MSG1 in the second cell.

With reference to the fourth aspect, in a possible implementation, the second information includes at least one of the following information: the target RACH resource used when the terminal device initiates the MSG1 to the second cell, an identifier of the second cell, a moment at which the first satellite base station sends the second information, and validity duration of the second information.

With reference to the fourth aspect, in a possible implementation, a second satellite base station to which the second cell belongs is the first satellite base station.

With reference to the fourth aspect, in a possible implementation, a second satellite base station to which the second cell belongs is a satellite base station different from the first satellite base station.

That is, the satellite base stations to which the second cell and the first cell belong are the same. It may be understood that, in the scenario, when the terminal device needs to be handed over from the first cell to the second cell, an intra-satellite handover is to be performed.

According to a fifth aspect, this application provides a communication apparatus, applied to a terminal device. The terminal device accesses a first cell of a first satellite base station. The apparatus includes: a transceiver module, configured to receive first information broadcast or multicast by the first satellite base station in the first cell, where the first information indicates a timing offset in terms of time between a second cell and the first cell, and the second cell is a neighboring cell of the first cell; and a processing module, configured to determine, based on the timing offset, a target timing advance command TA corresponding to the second cell.

With reference to the fifth aspect, in a possible implementation, the first information includes at least one of the following information: the timing offset, an identifier of the second cell, a moment at which the first satellite base station sends the first information, and validity duration of the first information.

With reference to the fifth aspect, in a possible implementation, a unit of the timing offset is any one of the following: a second, a millisecond, a microsecond, a frame, a subframe, a slot, and a sampling point.

With reference to the fifth aspect, in a possible implementation, a satellite base station to which the second cell belongs is the first satellite base station.

With reference to the fifth aspect, in a possible implementation, a satellite base station to which the second cell belongs is a second satellite base station different from the first satellite base station.

According to a sixth aspect, this application provides a communication apparatus, applied to a first satellite base station. The apparatus includes:
a transceiver module, configured to broadcast or multicast first information in a first cell of the first satellite base station, where the first information indicates a timing offset in terms of time between a second cell and the first cell, and the second cell is a neighboring cell of the first cell.

With reference to the sixth aspect, in a possible implementation, the first information includes at least one of the following information: the timing offset, an identifier of the second cell, a moment at which the first satellite base station sends the first information, and validity duration of the first information.

With reference to the sixth aspect, in a possible implementation, a unit of the timing offset is any one of the following: a second, a millisecond, a microsecond, a frame, a subframe, a slot, and a sampling point.

With reference to the sixth aspect, in a possible implementation, a satellite base station to which the second cell belongs is the first satellite base station.

With reference to the sixth aspect, in a possible implementation, a satellite base station to which the second cell belongs is a second satellite base station different from the first satellite base station.

According to a seventh aspect, this application provides a communication apparatus, applied to a terminal device. The terminal device accesses a first cell of a first satellite base station. The apparatus includes: a transceiver module, configured to obtain a target random access channel RACH resource used when the terminal device initiates a message 1 MSG1 to a second cell. The transceiver module is further configured to initiate the MSG1 to the second cell on the target RACH resource. The transceiver module is further configured to receive a message 2 MSG2 sent in response to the MSG1 by a second satellite base station to which the second cell belongs, where the MSG2 includes a target timing advance command TA and a target uplink grant resource that are used when the terminal device sends an MSG3 to the second cell. The transceiver module is further configured to: when it is determined that handover from the first cell to the second cell needs to be performed, send the MSG3 to the second cell based on the target TA and the target uplink grant resource.

With reference to the seventh aspect, in a possible implementation, the transceiver module is further configured to: receive second information broadcast or multicast by the first satellite base station, where the second information indicates the target RACH resource used when the terminal device initiates the MSG1 to the second cell; receive third information sent by the first satellite base station, where the third information indicates the terminal device to initiate the MSG1 in the second cell; and initiate the MSG1 to the second cell on the target RACH resource based on an indication of the third information.

With reference to the seventh aspect, in a possible implementation, the second information includes at least one of the following information: the target RACH resource used when the terminal device initiates the MSG1 to the second cell, an identifier of the second cell, a moment at which the first satellite base station sends the second information, and validity duration of the second information.

With reference to the seventh aspect, in a possible implementation, the second satellite base station broadcasts fourth information in the second cell by using a system message, where the fourth information indicates, to the terminal device located in the second cell, a RACH resource that is incapable of being used to send the MSG1 within a target time period, or the fourth information indicates, to the terminal device located in the second cell, a probability of a RACH resource used to send the MSG1 within a target time period.

With reference to the seventh aspect, in a possible implementation, the second satellite base station to which the second cell belongs is the first satellite base station.

With reference to the seventh aspect, in a possible implementation, the second satellite base station to which the second cell belongs is a satellite base station different from the first satellite base station.

According to an eighth aspect, this application provides a communication apparatus, applied to a first satellite base station. The apparatus includes: a transceiver module, configured to broadcast or multicast second information in a first cell of the first satellite base station, where the second information indicates a target random access channel RACH resource used when a terminal device initiates an MSG1 to a second cell. The transceiver module is further configured to send third information to the terminal device in the first cell of the first satellite base station, where the third information indicates the terminal device to initiate the MSG1 in the second cell.

With reference to the eighth aspect, in a possible implementation, the second information includes at least one of the following information: the target RACH resource used when the terminal device initiates the MSG1 to the second cell, an identifier of the second cell, a moment at which the first satellite base station sends the second information, and validity duration of the second information.

With reference to the eighth aspect, in a possible implementation, a second satellite base station to which the second cell belongs is the first satellite base station.

With reference to the eighth aspect, in a possible implementation, a second satellite base station to which the second cell belongs is a satellite base station different from the first satellite base station.

According to a ninth aspect, this application provides a communication system, where the communication system includes the apparatus according to the fifth aspect and the apparatus according to the sixth aspect.

According to a tenth aspect, this application provides a communication system, where the communication system includes the apparatus according to the seventh aspect and the apparatus according to the eighth aspect.

According to an eleventh aspect, this application provides a communication apparatus, including: a memory and a processor. The memory is configured to store program instructions. The processor is configured to invoke the program instructions in the memory, to perform the method according to any one of the first aspect, the second aspect, the third aspect, the fourth aspect, or the possible implementations thereof.

According to a twelfth aspect, this application provides a computer-readable medium. The computer-readable medium stores program code for computer execution. The program code includes instructions for performing the method according to any one of the first aspect, the second aspect, the third aspect, the fourth aspect, or the possible implementations thereof.

According to a thirteenth aspect, this application provides a computer program product, and the computer program product includes computer program code. When the computer program code is run on a computer, the computer is enabled to perform the method according to any one of the first aspect, the second aspect, the third aspect, the fourth aspect, or the possible implementations thereof.

For the technical effects brought about by any implementation of the fifth to thirteenth aspects, refer to the technical effects brought about by any one of the foregoing first to fourth aspects or the possible implementations thereof. Details are not described herein again.

### BRIEF DESCRIPTION OF DRAWINGS

FIG. 1 is a diagram of a satellite communication scenario according to this application;
FIG. 2 is a diagram of an inter-satellite handover according to this application;
FIG. 3 is a diagram of a network architecture of a satellite communication system according to this application;
FIG. 4 is a schematic flowchart of a communication method according to an embodiment of this application;
FIG. 5 is a schematic flowchart of a communication method according to another embodiment of this application;
FIG. 6 is a diagram of a structure of a communication apparatus according to an embodiment of this application; and
FIG. 7 is a diagram of a structure of a communication apparatus according to another embodiment of this application.

### DESCRIPTION OF EMBODIMENTS

The technical solutions in this application are described below with reference to the accompanying drawings.

As communication technologies develop, more urgent requirements are put forward for high efficiency, mobility, diversity, and the like of communication. Currently, one of development focuses in the field of communication systems is global mobile communication, and satellite communication is an important part of the global mobile communication. Satellite communication has characteristics of a long communication distance, a large coverage area, flexible networking, and the like, and can provide services for both fixed terminals and various mobile terminals.

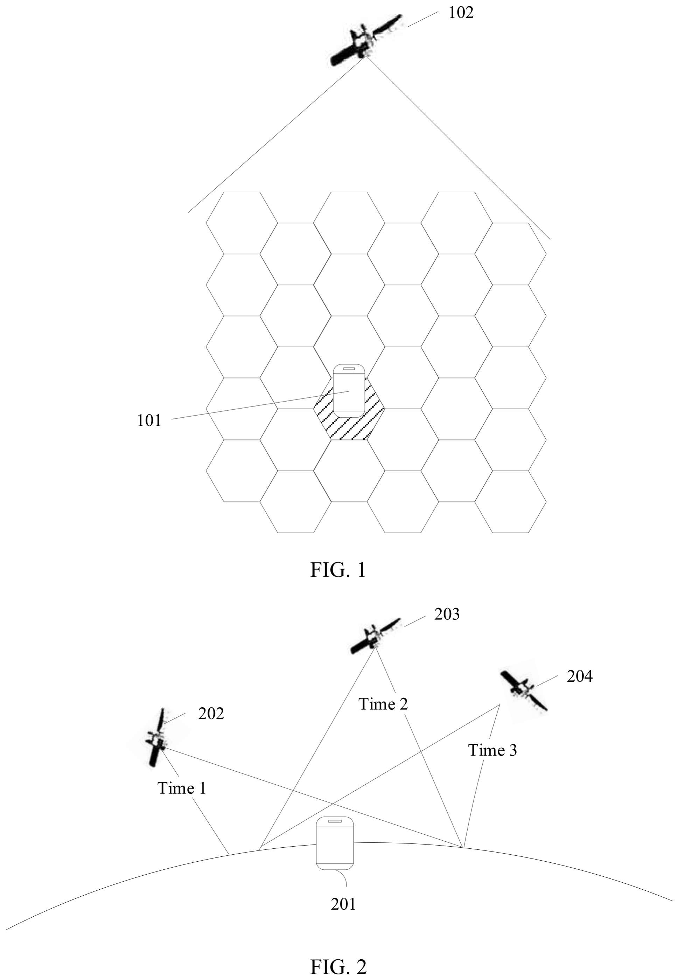

For example, FIG. 1 is a diagram of a structure of a satellite communication scenario according to this application. As shown in FIG. 1, the scenario includes a terminal device 101 and a satellite 102. When the terminal device 101 is located in a cell covered by the satellite 102, the terminal device 101 may communicate with the satellite 102.

The terminal device 101 used in the embodiments of this application may include various handheld devices having a wireless communication function, vehicle-mounted devices, wearable devices, computing devices, or other processing devices connected to a wireless modem. The terminal may be a mobile station (mobile station, MS), a subscriber unit (subscriber unit), a user equipment (user equipment, UE), a cellular phone (cellular phone), a smartphone (smartphone), a wireless data card, a personal digital assistant (personal digital assistant, PDA) computer, a tablet computer, a wireless modem (modem), a handheld device (handset), a laptop computer (laptop computer), a machine type communication (machine type communication, MTC) terminal, or the like.

It should be understood that, in the satellite communication scenario, a cell range covered by a single satellite may reach hundreds of thousands of square kilometers. However, to cover an entire area, hundreds or thousands of satellites are still required for networking coverage.

In addition, due to high-speed movement of satellites, user equipment (user equipment, UE) in a connected mode needs to be frequently handed over between different satellite cells, to ensure service continuity. A typical satellite cell handover scenario includes an intra-satellite cell handover and an inter-satellite cell handover.

For example, the intra-satellite handover is described by using FIG. 1 as an example. As shown in FIG. 1, the satellite 102 includes a plurality of cells, and the UE 101 is located in one of the plurality of cells. However, due to high-speed movement of the satellite, the UE 101 may need to be handed over to another cell included in the satellite 102, that is, the intra-satellite handover occurs.

For example, FIG. 2 is a diagram of the inter-satellite handover. As shown in FIG. 2, due to movement of a satellite, at a time 1, a satellite 202 covers a location of a terminal device 201. At a time 2, the satellite 202 moves to another place, and a satellite 203 covers the location of the terminal device 201. At a time 3, the satellite 203 moves to another place, and a satellite 204 covers the location of the terminal device 201. Therefore, different satellites provide access services to the terminal device 201 at different times. In this process, the terminal device 201 needs to be handed over between cells of different satellites, that is, the inter-satellite handover occurs.

It should be noted that this application belongs to a scope of satellite communication. The members of the 3rd Generation Partnership Project (3rd Generation Partnership Project, 3GPP) integrate the satellite communication and 5G technologies, to provide a typical network application architecture.

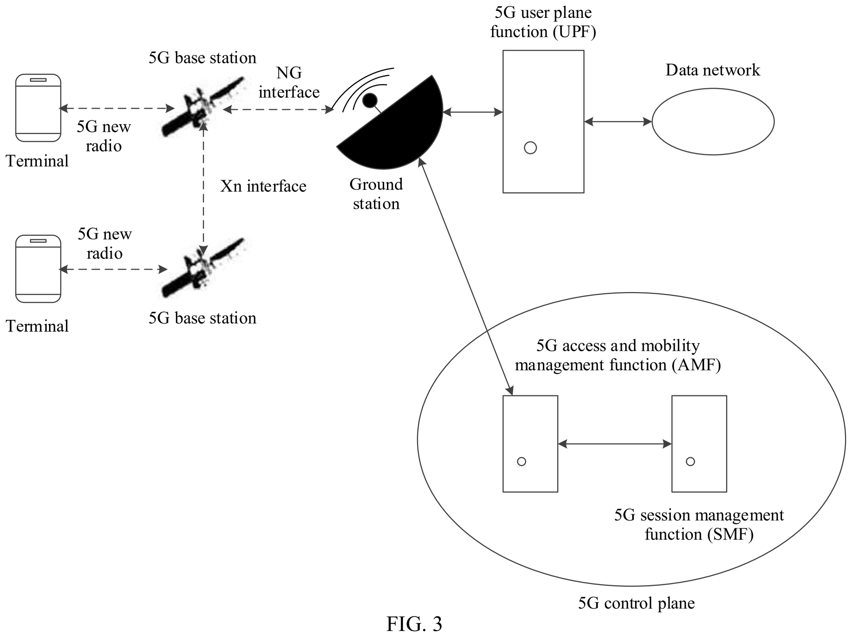

For example, FIG. 3 is a diagram of a network architecture of a satellite communication system according to this application. As shown in FIG. 3, a ground mobile terminal accesses a network through 5G new radio, and a 5G base station is deployed on a satellite and is connected to a ground core network through a wireless link. In addition, a wireless link exists between satellites, to complete a signaling interaction and user data transmission between base stations. Network elements and interfaces thereof in FIG. 3 are described below:

Terminal: is a mobile device that supports 5G new radio, and is typically a mobile phone, a pad, or another mobile device. The terminal may access a satellite network through an air interface and initiate a service such as a call or Internet access.

5G base station: mainly provides a wireless access service, schedules a wireless resource to an access terminal, and provides a reliable wireless transmission protocol, data encryption protocol, and the like.

5G core network: user access control, mobility management, session management, user security authentication, billing, and other services. The 5G core network includes a plurality of functional units and may be divided into functional entities in a control plane and a data plane. An access and mobility management function (Access and Mobility Management Function, AMF) is responsible for user access management, security authentication, and mobility management. A user plane function (User Plane Unit, UPF) is responsible for managing transmission of user plane data, traffic statistics, and other functions. A session management function (Session Management Function, SMF) is mainly responsible for interacting with a separated data plane.

Ground station: is responsible for forwarding signaling and service data between a satellite base station and the 5G core network.

5G new radio: a wireless link between the terminal and a base station.

Xn interface: an interface between the 5G base station and a base station, mainly used for a signaling interaction, for example, a handover.

NG interface: an interface between the 5G base station and the 5G core network.

Usually, when UE determines to be handed over from a source cell to a target cell, the UE needs to perform a random access procedure to the target cell.

Specifically, the random access procedure to the target cell includes:

Step 1: The UE sends a message 1 (MSG1) including a preamble (preamble) sequence to a satellite to which the target cell belongs.

Step 2: After receiving the MSG1 sent by the UE, the satellite to which the target cell belongs sends a message 2 (MSG2) to the UE, where the MSG2 includes a timing advance (timing advance, TA) and an uplink grant resource that is used for transmitting a message 3 (MSG3).

The TA is used for uplink synchronization between the UE and the target cell, and the uplink grant resource is used by the UE to send the message 3 (MSG3).

Step 3: The UE obtains the uplink synchronization with the target cell based on the TA indicated by the MSG2, and initiates, on the uplink grant resource, the MSG3 to the satellite to which the target cell belongs.

Step 4: After receiving the MSG3, the satellite to which the target cell belongs returns a message 4 (MSG4) to the UE, so that the UE confirms that a handover is successfully performed to the target cell.

It is noted herein that for detailed descriptions of steps 1 to 4, reference may be made to descriptions in a related technology. Details are not described herein.

It should be understood that in a process in which the terminal device is handed over from the source cell to the target cell, a handover delay is very important.

Currently, the long term evolution (long term evolution, LTE) Rel-14 provides a random access channel-less (random access channel-less, Rach-less) handover solution whose basic principle is as follows: Before performing a handover, UE obtains a TA and an uplink grant resource of a target cell in advance; and when performing the handover, may omit the MSG1 and the MSG2, and directly initiate the MSG3 by using the obtained TA and uplink grant resource of the target cell. It may be understood that, in the handover solution, the UE omits the MSG1 and the MSG2 when handing over to the target cell. Therefore, a handover delay may be reduced.

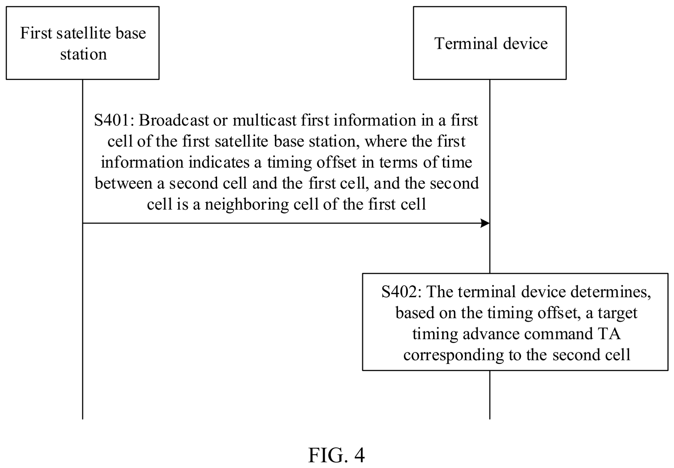

It may be understood that one of main purposes of the UE in the process of handing over to the target cell is to obtain the TA of the target cell. Specifically, in a process of omitting the MSG1 and the MSG2, as shown in FIG. 4, when a time of the source cell and a time of the target cell are synchronous, the UE first obtains a downlink propagation delay difference (T1-T2) between the source cell and the target cell. If an uplink propagation delay is the same as a downlink propagation delay, the UE may deduce that the TA corresponding to the target cell is equal to TA-2×(T1-T2) corresponding to the source cell. However, when the time of the source cell and the time of the target cell are not synchronous, the UE may deduce that the TA corresponding to the target cell is equal to TA-2×(T1-T2)+*ΔT*, where *ΔT* represents a downlink timing offset in terms of time between the source cell and the target cell.

The downlink timing offset in terms of time between the source cell and the target cell may also be referred to as downlink synchronization deviation between the source cell and the target cell.

However, a person skilled in the art finds the following situation: For a geographical range, when a plurality of UEs within the geographical range need to be handed over from a same source cell to a same target cell, there is a problem of high signaling overheads of a communication system when the foregoing handover solution is used.

For example, if there are 100 UEs within a geographical range, and all the 100 UEs may need to be handed over from a cell 1 included in a satellite base station 1 to a cell 2 included in the satellite base station 1, or all the 100 UEs may need to be handed over from a cell 1 included in a satellite base station 1 to a cell 2 included in a satellite base station 2, there is a problem of high signaling overheads of the communication system when the foregoing handover solution is used.

In view of this, this application provides a communication method, to alleviate a problem of high signaling overheads of a communication system caused by a handover process while reducing a handover delay.

Specifically, FIG. 4 is a schematic flowchart of a communication method according to an embodiment of this application. As shown in FIG. 4, the method in this embodiment includes S401 and S402.

S401: A first satellite base station broadcasts or multicasts first information in a first cell of the first satellite base station. Correspondingly, a terminal device receives the first information broadcast or multicast by the first satellite base station in the first cell, where the first information indicates a timing offset in terms of time between a second cell and the first cell, and the second cell is a neighboring cell of the first cell.

In this embodiment, the first cell is a cell accessed by the terminal device (that is, the first cell is a serving cell), and a satellite base station including the first cell is referred to as the first satellite base station.

It is noted herein that, in this embodiment, the first satellite base station is also referred to as a source satellite base station, and the first cell is also referred to as a source satellite cell. This does not constitute a limitation on this application.

In this embodiment, the second cell is a cell neighboring to the first cell, that is, the neighboring cell of the first cell, and a satellite base station including the second cell is referred to as a second satellite base station.

In this embodiment, the second satellite base station is also referred to as a target satellite base station, and the second cell is also referred to as a target satellite cell. This does not constitute a limitation on this application.

In this embodiment, to enable the terminal device accessing the first cell to obtain, in advance, a TA (also referred to as a target TA in this embodiment) required for random access to the second cell during handover to the second cell, the first satellite base station sends, to the terminal device, the first information indicating the timing offset in terms of time between the second cell and the first cell, so that the terminal device determines, based on the timing offset, the target TA required for random access to the second cell.

For ease of understanding of a concept of downlink synchronization deviation, an example is provided: Different satellite cells are required to be synchronous in terms of time. However, due to various environmental factors, various deviation may exist. Such deviation may be understood as the downlink synchronization deviation. For example, at 10 o'clock, a frame number of a first satellite cell is a frame 1000, and the second satellite cell is a frame 1000 offset by several symbols. In this case, the several symbols may be understood as a downlink timing offset between the first satellite cell and the second satellite cell.

In addition, for a plurality of terminal devices in a geographical range, when the plurality of terminal devices are handed over from the first cell to the second cell, corresponding timing offsets in terms of time between the second cell and the first cell are the same. Therefore, in this embodiment, the first satellite base station sends, to the terminal device by broadcasting or multicasting the first information in the first cell, the first information indicating the timing offset in terms of time between the second cell and the first cell.

It should be noted that, in this embodiment, the timing offset may also be referred to as a downlink synchronization offset, or downlink timing deviation/a downlink timing offset. This does not constitute a limitation on this application.

In addition, it should be further noted that, in this embodiment, a unit of the downlink timing offset is not limited, and for example, may be any one of the following: a second, a millisecond, a microsecond, a frame, a subframe, a slot, and a sampling point.

In an implementation, the first information in this embodiment includes at least one of the following information: the timing offset, an identifier of the second cell, a moment at which the first satellite base station sends the first information, and validity duration of the first information.

In an example, during specific implementation, the first information may be implemented by using the following NTN configuration (NTN-Config) information element:

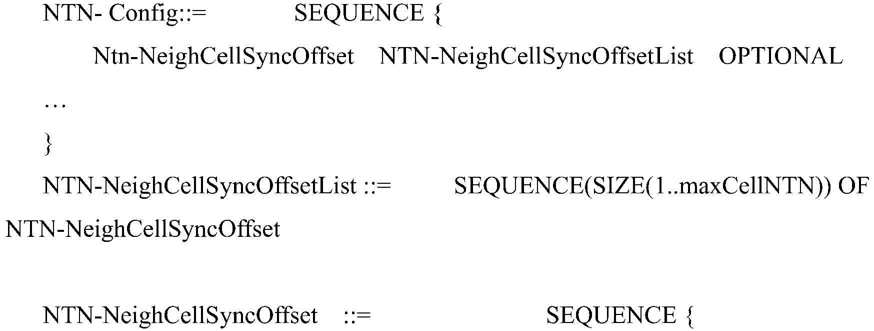

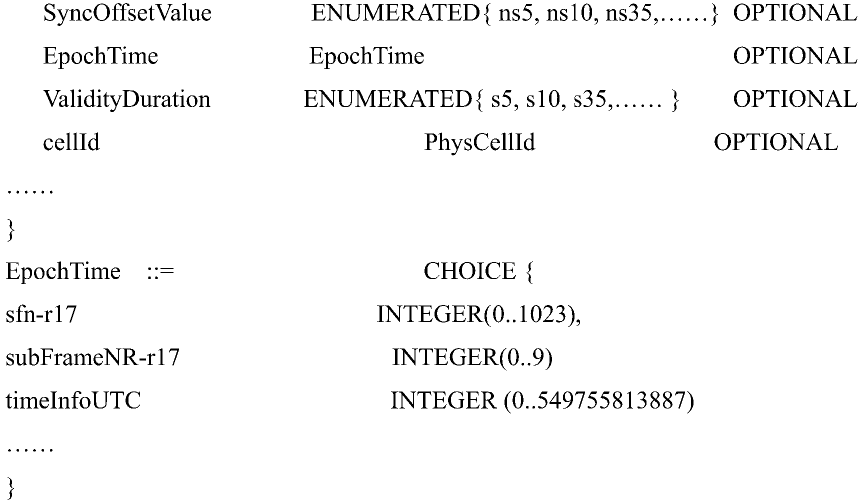

It may be understood that Ntn-NeighCellSyncOffset information is configured in the NTN-Config information element, and indicates neighboring cell synchronization offset information. The Ntn-NeighCellSyncOffset information is a list (expressed as NTN-NeighCellSyncOffsetList).

Specifically, NTN-NeighCellSyncOffsetList ::= SEQUENCE(SIZE(1..maxCellNTN)) OF NTN-NeighCellSyncOffset indicates NTN-NeighCellSyncOffset of neighboring cells that may be configured at most.

For example, if maxCellNTN is 8, it indicates that NTN-NeighCellSyncOffset of eight neighboring cells may be configured at most.

Specifically, each NTN-NeighCellSyncOffset may include SyncOffsetValue, EpochTime, ValidityDuration, and cellId information.

SyncOffsetValue represents an offset (that is, synchronization deviation or a downlink timing offset) for a serving satellite cell, in nanoseconds (ns), and for example, may be configured as 5, 10, 35, or the like.

EpochTime represents a time when the message is sent (that is, a moment at which the first satellite base station sends the first information), and is also referred to as an epoch time in this embodiment. Specifically, the epoch time may be configured in CHOICE information. For example, calculation is performed based on sfn-r17, that is, based on a frame boundary, that is, a message of an n^{th} radio frame; or calculation is performed based on subFrameNR-r17, that is, based on a subframe boundary, that is, a message of an n^{th} subframe; or calculation is performed based on timeInfoUTC, that is, based on an absolute time.

ValidityDuration represents the validity duration (that is, validity duration of the first information). It should be understood that a satellite is always in motion, and a set of parameters may become invalid after a period of time. Therefore, in the implementation, the first information further includes the validity duration. In this case, when receiving the first information, the terminal device may determine, based on the epoch time, the validity duration, and a current time, whether the first information can be used. For example, if the set of parameters is sent at 1:00 and validity duration is 5 minutes, the terminal device does not use the set of parameters if the terminal device receives the set of parameters at 1:06, but uses the set of parameters if the terminal device receives the set of parameters at 1:04.

cellId represents an identifier of a cell to which the set of parameters belongs.

S402: The terminal device determines, based on the timing offset, a target timing advance command TA corresponding to the second cell.

In this embodiment, when receiving the first information broadcast or multicast by the first satellite base station, the terminal device determines, based on the timing offset that is in terms of time between the second cell and the first cell and that is indicated by the first information, the target TA (also referred to as a target TA corresponding to the second cell in this embodiment) required when the terminal device is handed over to the second cell.

Specifically, the terminal device may first obtain the downlink propagation delay difference (for example, expressed as T1-T2) between the first cell and the second cell. Assuming that an uplink propagation delay is the same as a downlink propagation delay, the terminal device may deduce that the target TA corresponding to the second cell is equal to TA-2×(T1-T2)+*ΔT* corresponding to a source satellite cell, where Δ*T* is the downlink timing offset that is in terms of time between the second cell and the first cell and that is indicated by the first information.

It may be seen that, in this embodiment, the terminal device determines, based on the timing offset that is between the second cell and the first cell and that is indicated by the first information broadcast by the first satellite base station, the target TA required when the terminal device needs to be handed over from the first cell to the second cell (that is, the terminal device may obtain the target TA in advance, instead of determining the target TA in a process of performing handover from the first cell to the second cell). Therefore, if the terminal device determines later that the handover from the first cell to the second cell needs to be performed, the terminal device may directly send an MSG3 to the second cell based on the target TA obtained in advance, to complete a subsequent random access procedure.

That the terminal device directly sends the MSG3 to the second cell based on the target TA obtained in advance includes: The terminal device obtains a target uplink grant resource used when the terminal device sends the MSG3 to the second cell; and sends the MSG3 to the second cell based on the target TA and the target uplink grant resource.

It is noted herein that how the terminal device specifically obtains the target uplink grant resource used when the MSG3 is sent to the second cell is not limited in this embodiment. For example, the first satellite base station may indicate the target uplink grant resource to the terminal device by using the first cell (that is, a serving cell indication manner), and the terminal device obtains the target uplink grant resource by itself through configuration of a conditional handover.

In this embodiment, before performing the handover, the terminal device may obtain, in advance, the target TA and the target uplink grant resource that are corresponding to the second cell. Therefore, when performing the handover, the terminal device may not perform an MSG1 or an MSG2, but directly initiate the MSG3 by using the target TA and the target uplink grant resource of the second cell that are obtained, thereby reducing a delay of the process in which the terminal device is handed over from the first cell to the second cell. In addition, it may be further understood that, in this embodiment, the first satellite base station sends, to the terminal device in a broadcast or multicast manner instead of a unicast manner, the downlink timing offset that is in terms of time between the second cell and the first cell and that is indicated by the first information. Therefore, signaling overheads are further reduced.

It is noted herein that a satellite base station to which the second cell belongs is not limited in this embodiment.

For example, in a scenario, a satellite base station to which the second cell belongs is the first satellite base station. That is, the satellite base stations to which the second cell and the first cell belong are the same. It may be understood that, in the scenario, when the terminal device needs to be handed over from the first cell to the second cell, an intra-satellite handover is to be performed.

For example, in another scenario, a satellite base station to which the second cell belongs is the second satellite base station different from the first satellite base station. That is, the satellite base stations to which the second cell and the first cell belong are different. It may be understood that, in the scenario, when the terminal device needs to be handed over from the first cell to the second cell, an inter-satellite handover is to be performed.

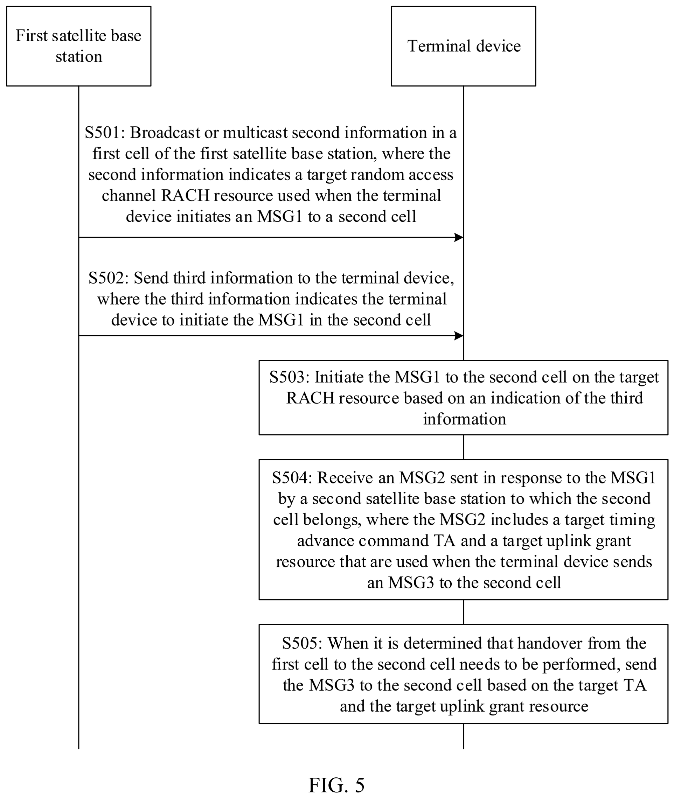

With reference FIG. 5, the following describes a schematic flowchart of a communication method according to another embodiment of this application.

As shown in FIG. 5, the method in this embodiment includes S501, S502, S503, S504, and S505.

S501: A first satellite base station broadcasts or multicasts second information in a first cell of the first satellite base station. Correspondingly, a terminal device receives the second information, where the second information indicates a target random access channel RACH resource used when the terminal device initiates an MSG1 to a second cell.

In this embodiment, the first cell is a cell accessed by the terminal device (that is, the first cell is a serving cell), and a satellite base station including the first cell is referred to as the first satellite base station.

It is noted herein that, in this embodiment, the first satellite base station is also referred to as a source satellite base station, and the first cell is also referred to as a source satellite cell. This does not constitute a limitation on this application.

In this embodiment, the second cell is a cell neighboring to the first cell, that is, the neighboring cell of the first cell, and a satellite base station including the second cell is referred to as a second satellite base station.

In this embodiment, the second satellite base station is also referred to as a target satellite base station, and the second cell is also referred to as a target satellite cell. This does not constitute a limitation on this application.

In this embodiment, the first satellite base station broadcasts or multicasts, in the first cell of the first satellite base station, the second information indicating a RACH resource (also referred to as the target RACH resource) used when the terminal device initiates the MSG1 to the second cell. Correspondingly, the terminal device receives the second information.

Optionally, in this embodiment, the second cell is only one of a plurality of neighboring cells. In the scenario, in this embodiment, the second information broadcast or multicast in the first cell of the first satellite base station by the first satellite base station may indicate a RACH resource used when the terminal device initiates the MSG1 to each of the plurality of neighboring cells. The plurality of neighboring cells include the second cell.

That is, in this embodiment, the first satellite base station broadcasts or multicasts the target RACH resource used when the terminal device initiates the MSG1 to the second cell.

In an implementation, the second information includes at least one of the following information: the target RACH resource used when the terminal device initiates the MSG1 to the second cell, an identifier of the second cell, a moment at which the first satellite base station sends the second information, and validity duration of the second information.

For example, during specific implementation, the second information may be implemented by using the following NTN configuration (NTN-Config) information element:

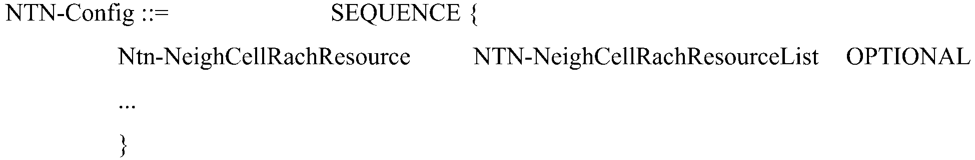

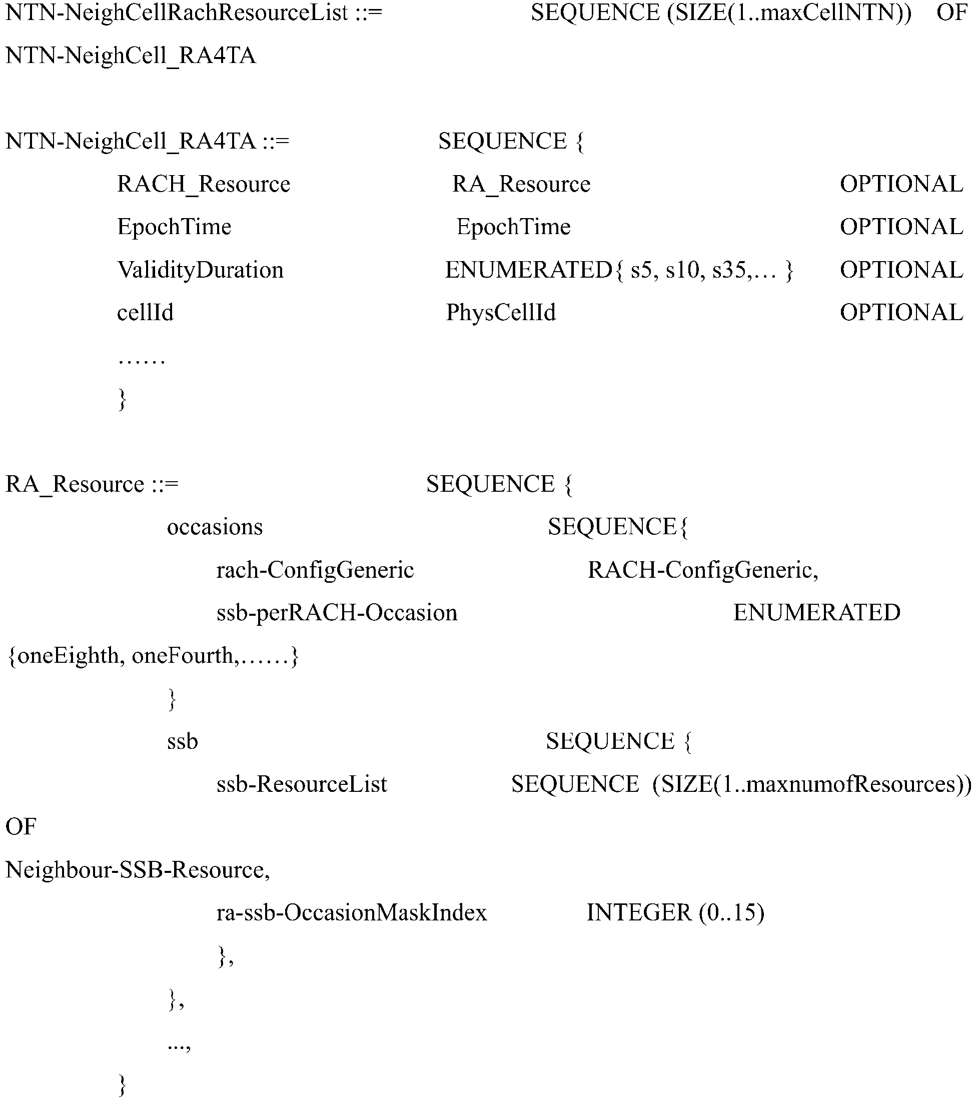

It may be understood that Ntn-NeighCellRachResource information is configured in the NTN-Config information element, and represents neighboring cell random access resource information. The Ntn-NeighCellRachResource information is a list (expressed as NTN-NeighCellRachResourceList).

Specifically, NTN-NeighCellRachResourceList ::= SEQUENCE (SIZE(1..maxCellNTN)) OF NTN-NeighCell_RA4TA indicates NTN-NeighCell_RA4TA of neighboring cells that may be configured at most.

For example, if maxCellNTN is 6, it indicates that NTN-NeighCell_RA4TA of six neighboring cells may be configured at most.

Specifically, each NTN-NeighCell_RA4TA may include RACH_Resource, EpochTime, ValidityDuration, and cellId information.

RACH_Resource represents a RACH resource corresponding to a neighboring cell. As shown above, the RACH resource may specifically be configured based on an access occasion (occasions) and synchronization signal block (synchronization signal block, SSB) information.

EpochTime represents a time at which the message is sent (a moment at which the first satellite base station sends the second information), and is also referred to as an epoch time in this embodiment.

ValidityDuration represents validity duration (that is, validity duration of the second information). It should be understood that a satellite is always in motion, and a set of parameters may become invalid after a period of time. Therefore, in the implementation, the second information further includes the validity duration. In this case, when receiving the second information, the terminal device may determine, based on the epoch time, the validity duration, and a current time, whether the second information can be used.

cellId represents an identifier of a cell to which the set of parameters belongs.

S502: The first satellite base station sends third information to the terminal device. Correspondingly, the terminal device receives the third information, and the third information indicates the terminal device to initiate an MSG1 in the second cell.

In an implementation, the third information may be carried in a downlink control information (downlink control indicator, DCI). Alternatively, in other words, the first satellite base station may trigger the terminal device to initiate the MSG1 in the second cell through a physical downlink control channel (physical downlink control channel, PDCCH).

During specific implementation, for example, a new field "Cellindex_bitmap" may be added to the DCI to indicate which cells the terminal device is allowed to initiate the MSG1 to (that is, to indicate at least one cell to which the terminal device initiates the MSG1). A quantity of bits in Cellindex_bitmap is equal to a quantity of at least one cell configured in the second information. If all 0s are present, it indicates that the MSG1 is initiated in a current serving cell.

For example, if the second information indicates a RACH resource used when the terminal device initiates the MSG1 to each of four neighboring cells, the quantity of bits in Cellindex_bitmap is equal to 4.

Optionally, the DCI used to trigger the terminal device to initiate the MSG1 is scrambled by a group radio network temporary identifier (group radio network temporary identifier, G-RNTI). A serving cell pre-configures a group-RNTI for the terminal device, so that the DCI can trigger, at a time, users in a group to initiate random access, thereby reducing signaling overheads of a one-to-one DCI notification. In addition, it may be understood that, in the scenario, after receiving the DCI scrambled by the G-RNTI, terminal devices belonging to a same group initiate contention-based random access on an RO of a designated cell.

S503: The terminal device initiates the MSG1 to the second cell on the target RACH resource based on an indication of the third information.

Specifically, in this embodiment, the first satellite base station indicates, to the terminal device by using the second information, the target RACH resource used when the terminal device initiates the MSG1 to the second cell. Therefore, after receiving the third information, the terminal device initiates the MSG1 to the second cell on the target RACH resource through the triggering based on the third information.

S504: The terminal device receives an MSG2 sent in response to the MSG1 by a second satellite base station to which the second cell belongs, where the MSG2 includes a target timing advance command TA and a target uplink grant resource that are used when the terminal device sends an MSG3 to the second cell.

It should be understood that after initiating the MSG1 to the second cell on the target RACH resource, the terminal device receives the MSG2 sent in response to the MSG1 by the second satellite base station to which the second cell belongs. The MSG2 includes the target TA corresponding to the second cell and the target uplink grant resource used when the terminal device sends the MSG3 to the second cell, so that the terminal device learns the TA and the uplink grant resource that are required when the MSG3 is sent to the second cell.

S505: When it is determined that handover from the first cell to the second cell needs to be performed, the terminal device sends the MSG3 to the second cell based on the target TA and the target uplink grant resource.

In this embodiment, when the terminal device determines that the handover from the first cell to the second cell needs to be performed, because the first satellite base station obtains, in advance, the target TA and the target uplink grant resource that are required when the MSG3 is sent to the second cell, the terminal device may directly send, when it is determined that the handover from the first cell to the second cell needs to be performed, the MSG3 to the second cell based on the target TA and the target uplink grant resource that are obtained in advance, that is, when it is determined that the handover from the first cell to the second cell needs to be performed, the terminal device may ignore a process of the MSG1 and the MSG2, thereby reducing a delay.

It can be seen that, in this embodiment, the first satellite base station broadcasts or multicasts the third information for indicating the RACH resource used when the terminal device initiates the MSG1 to each one of at least one cell, and the terminal device is dynamically triggered by using the DCI to initiate the MSG1 to the second cell, so that the terminal device may obtain the target TA corresponding to the second cell and the target uplink grant resource in advance, so that when it is determined that the handover from the first cell to the second cell needs to be performed, the terminal device may ignore the process of the MSG1 and the MSG2, to reduce a delay.

It is noted herein that a satellite base station to which the second cell belongs is not limited in this embodiment.

For example, in a scenario, a satellite base station to which the second cell belongs is the first satellite base station. That is, the satellite base stations to which the second cell and the first cell belong are the same. It may be understood that, in the scenario, when the terminal device needs to be handed over from the first cell to the second cell, an intra-satellite handover is to be performed.

For example, in another scenario, a satellite base station to which the second cell belongs is the second satellite base station different from the first satellite base station. That is, the satellite base stations to which the second cell and the first cell belong are different. It may be understood that, in the scenario, when the terminal device needs to be handed over from the first cell to the second cell, an inter-satellite handover is to be performed.

Optionally, in this embodiment, the second satellite base station may further broadcast fourth information in the second cell by using a system message, and the fourth information indicates, to the terminal device located in the second cell, a RACH resource that is incapable of being used to send the MSG1 within a target time period, or the fourth information indicates, to the terminal device located in the second cell, a probability of a RACH resource that may be used to send the MSG1 within a target time period.

Alternatively, in other words, in this embodiment, the second satellite base station may further broadcast, to the terminal device in the second cell by using a system message, which RACH resources are incapable of being used to initiate the MSG1 within a target time period, to avoid conflict with the terminal device in the serving cell during initiation of the MSG1. The target time period may be equivalent to the validity duration described above. In addition, an indication delivered in the second cell by the second satellite base station may be parameter information such as a probability and a weight of indicating the terminal device in the second cell to use a RACH resource.

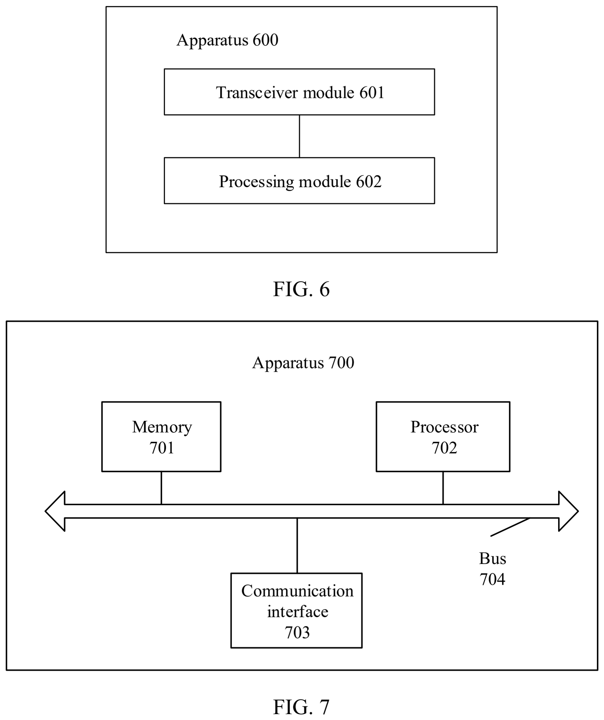

The foregoing describes, in detail, the communication method according to the embodiments of this application with reference to FIG. 4 and FIG. 5. The following describes, in detail, a communication apparatus according to embodiments of this application with reference to FIG. 6 and FIG. 7.

FIG. 6 is a diagram of a structure of a communication apparatus according to an embodiment of this application. Specifically, as shown in FIG. 6, the apparatus 600 includes a transceiver module 601 and a processing module 602.

In a first embodiment, the communication apparatus is applied to a terminal device, and the terminal device accesses a first cell of a first satellite base station.

Specifically, in the first embodiment, the transceiver module 601 is configured to receive first information broadcast or multicast by the first satellite base station in the first cell. The first information indicates a timing offset in terms of time between a second cell and the first cell, and the second cell is a neighboring cell of the first cell. The processing module 602 is configured to determine, based on the timing offset, a target timing advance command TA corresponding to the second cell.

In a possible implementation, the first information includes at least one of the following information: the timing offset, an identifier of the second cell, a moment at which the first satellite base station sends the first information, and validity duration of the first information.

In a possible implementation, a unit of the timing offset is any one of the following: a second, a millisecond, a microsecond, a frame, a subframe, a slot, and a sampling point.

In a possible implementation, a satellite base station to which the second cell belongs is the first satellite base station.

In a possible implementation, a satellite base station to which the second cell belongs is a second satellite base station different from the first satellite base station.

In a second embodiment, the communication apparatus is applied to a first satellite base station.

Specifically, in the second embodiment, the transceiver module 601 is configured to broadcast or multicast first information in a first cell of the first satellite base station, where the first information indicates a timing offset in terms of time between a second cell and the first cell, and the second cell is a neighboring cell of the first cell.

In a possible implementation, the first information includes at least one of the following information: the timing offset, an identifier of the second cell, a moment at which the first satellite base station sends the first information, and validity duration of the first information.

In a possible implementation, a unit of the timing offset is any one of the following: a second, a millisecond, a microsecond, a frame, a subframe, a slot, and a sampling point.

In a possible implementation, a satellite base station to which the second cell belongs is the first satellite base station.

In a possible implementation, a satellite base station to which the second cell belongs is a second satellite base station different from the first satellite base station.

In a third embodiment, the communication apparatus is applied to a terminal device, and the terminal device accesses a first cell of the first satellite base station.

Specifically, in the third embodiment, the transceiver module 601 is configured to obtain a target random access channel RACH resource used when the terminal device initiates a message 1 MSG1 to the second cell. The transceiver module 601 is further configured to initiate the MSG1 to the second cell on the target RACH resource. The transceiver module 601 is further configured to receive a message 2 MSG2 sent in response to the MSG1 by a second satellite base station to which the second cell belongs, where the MSG2 includes a target timing advance command TA and a target uplink grant resource that are used when the terminal device sends an MSG3 to the second cell. The transceiver module 601 is further configured to: when it is determined that handover from the first cell to the second cell needs to be performed, send the MSG3 to the second cell based on the target TA and the target uplink grant resource.

In a possible implementation, the transceiver module 601 is further configured to: receive second information broadcast or multicast by the first satellite base station, where the second information indicates the target RACH resource used when the terminal device initiates the MSG1 to the second cell; receive third information sent by the first satellite base station, where the third information indicates the terminal device to initiate the MSG1 in the second cell; and
initiate the MSG1 to the second cell on the target RACH resource based on an indication of the third information.

In a possible implementation, the second information includes at least one of the following information: the target RACH resource used when the terminal device initiates the MSG1 to the second cell, an identifier of the second cell, a moment at which the first satellite base station sends the second information, and validity duration of the second information.

In a possible implementation, the second satellite base station broadcasts fourth information in the second cell by using a system message, and the fourth information indicates, to the terminal device located in the second cell, a RACH resource that is incapable of being used to send the MSG1 within a target time period, or the fourth information indicates, to the terminal device located in the second cell, a probability of a RACH resource used to send the MSG1 within a target time period.

In a possible implementation, the second satellite base station to which the second cell belongs is the first satellite base station.

In a possible implementation, the second satellite base station to which the second cell belongs is a satellite base station different from the first satellite base station.

In a fourth embodiment, the communication apparatus is applied to a first satellite base station.

Specifically, in the fourth embodiment, the transceiver module 601 is configured to broadcast or multicast second information in a first cell of the first satellite base station, where the second information indicates a target random access channel RACH resource used when a terminal device initiates an MSG1 to a second cell. The transceiver module 601 is further configured to send third information to the terminal device in the first cell of the first satellite base station, where the third information indicates the terminal device to initiate the MSG1 in the second cell.

In a possible implementation, the second information includes at least one of the following information: the target RACH resource used when the terminal device initiates the MSG1 to the second cell, an identifier of the second cell, a moment at which the first satellite base station sends the second information, and validity duration of the second information.

In a possible implementation, a second satellite base station to which the second cell belongs is the first satellite base station.

In a possible implementation, the second satellite base station to which the second cell belongs is a satellite base station different from the first satellite base station.

FIG. 7 is a diagram of a structure of a communication apparatus according to another embodiment of this application. The apparatus shown in FIG. 7 may be configured to perform the method according to any one of the foregoing embodiments.

As shown in FIG. 7, the apparatus 700 in this embodiment includes a memory 701, a processor 702, a communication interface 703, and a bus 704. A communication connection among the memory 701, the processor 702, and the communication interface 703 is implemented through the bus 704.

The memory 701 may be a read-only memory (read only memory, ROM), a static storage device, a dynamic storage device, or a random access memory (random access memory, RAM). The memory 701 may store a program. When the program stored in the memory 701 is executed by the processor 702, the processor 702 is configured to perform the steps of the method shown in FIG. 4 or FIG. 5.

The processor 702 may use a general-purpose central processing unit (central processing unit, CPU), a microprocessor, an application-specific integrated circuit (application-specific integrated circuit, ASIC), or one or more integrated circuits, and is configured to execute a related program, to implement the method shown in FIG. 4 or FIG. 5 in this application.

Alternatively, the processor 702 may be an integrated circuit chip, and has a signal processing capability. In an implementation process, the steps of the method in FIG. 4 or FIG. 5 in the embodiment of this application may be completed by using an integrated logic circuit of hardware or an instruction in a form of software in the processor 702.

The processor 702 may alternatively be a general-purpose processor, a digital signal processor (digital signal processing, DSP), an application-specific integrated circuit (ASIC), a field programmable gate array (field programmable gate array, FPGA) or another programmable logic device, a discrete gate or transistor logic device, or a discrete hardware component. The processor may implement or perform the methods, the steps, and the logical block diagrams that are disclosed in the embodiments of this application. The general purpose processor may be a microprocessor, any conventional processor, or the like.

The steps of the methods disclosed with reference to the embodiments of this application may be directly performed and completed by a hardware decoding processor, or may be performed and completed by using a combination of hardware and software modules in a decoding processor. The software module may be located in a mature storage medium in the art, such as a random access memory, a flash memory, a read-only memory, a programmable read-only memory, an electrically erasable programmable memory, or a register. The storage medium is located in the memory 701. The processor 702 reads information in the memory 701, and completes, in combination with hardware of the processor 702, a function that needs to be executed by a unit included in the apparatus in this application, for example, may perform the steps or execute the functions in the embodiment shown in FIG. 4 or FIG. 5.

The communication interface 703 may use, but is not limited to, a transceiver apparatus of a transceiver type, to implement communication between the apparatus 700 and another device or a communication network.

The bus 704 may include a path for transferring information between components (such as the memory 701, the processor 702, and the communication interface 703) of the apparatus 700.

It should be understood that the apparatus 700 shown in this embodiment of this application may be an electronic device, or may be a chip configured in an electronic device.

All or some of the foregoing embodiments may be implemented by using software, hardware, firmware, or any other combination thereof. When software is used to implement the embodiments, all or some of the foregoing embodiments may be implemented in a form of a computer program product. The computer program product includes one or more computer instructions or computer programs. When the computer instructions or the computer programs are loaded or executed on a computer, the procedures or functions according to the embodiments of this application are all or partially generated. The computer may be a general-purpose computer, a dedicated computer, a computer network, or another programmable apparatus. The computer instructions may be stored in a computer-readable storage medium, or transmitted from one computer-readable storage medium to another computer-readable storage medium. For example, the computer instructions may be transmitted from a website, computer, server, or data center to another website, computer, server, or data center in a wired (for example, infrared, radio, or microwave) manner. The computer-readable storage medium may be any usable medium accessible to a computer, or a data storage device, such as a server or a data center, integrating one or more usable media. The usable medium may be a magnetic medium (such as a floppy disk, a hard disk, or a magnetic tape), an optical medium (for example, a DVD), a semiconductor medium, or the like. The semiconductor medium may be a solid-state drive.

It should be understood that the term "and/or" in this specification describes only an association relationship for describing associated objects and represents that three relationships may exist. For example, A and/or B may represent three cases: Only A exists, both A and B exist, and only B exists, where A and B may be singular or plural. In addition, the character "/" in this specification generally indicates an "or" relationship between the associated objects, but may also indicate an "and/or" relationship. The relationship can be understood by referring to the context.

In this application, "at least one" is one or more and "a plurality of" is two or more. "At least one of the following items (pieces)" or a similar expression thereof means any combination of these items, including any combination of singular items (pieces) or plural items (pieces). For example, at least one item (piece) of a, b, or c may indicate a, b, c, a and b, a and c, b and c, or a, b, and c, where a, b, and c may be singular or plural.

It should be understood that, in embodiments of this application, sequence numbers of the foregoing processes do not mean execution sequences. The execution sequences of the processes should be determined according to functions and internal logic of the processes, and should not be construed as any limitation on the implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are executed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed operating process of the foregoing described system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, the unit division is merely logical function division and may be other division in actual implementation. For example, a plurality of units or components may be combined or integrated into another system, or some features may be ignored or not executed. In addition, the displayed or discussed mutual couplings or direct couplings or communication connections may be implemented as indirect couplings or communication connections through some interfaces, apparatus or units, and may be implemented in electronic, mechanical, or other forms.

The units described as separate components may be or may not be physically separated, and the components displayed as units may be or may not be physical units, that is, may be located in one place or distributed on a plurality of network units. Some or all of the units may be selected according to actual requirements to achieve the objectives of the solutions of embodiments.

In addition, functional units in embodiments of this application may be integrated into one processing unit, or each of the units may exist alone physically, or two or more units may be integrated into one unit.

When the functions are implemented in the form of a software functional unit and sold or used as an independent product, the functions may be stored in a computer-readable storage medium. Based on such an understanding, the technical solutions of this application essentially, or the part contributing to a current technology, some of the technical solutions may be implemented in the form of a software product. The computer software product is stored in a storage medium and includes several instructions for instructing a computing device (this may be a personal computer, a server, a network device, or the like) to perform all or some of the steps of the methods described in the embodiments of this application. The foregoing storage medium includes any medium that can store program code, such as a USB flash drive, a removable hard disk, a read-only memory, a random access memory, a magnetic disk, or an optical disc.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, applied to a first communication apparatus, wherein the first communication apparatus accesses a first cell of a first satellite base station, and the method comprises:
receiving first information broadcast or multicast by the first satellite base station in the first cell, wherein the first information indicates a timing offset in terms of time between a second cell and the first cell, and the second cell is a neighboring cell of the first cell; and
determining, based on the timing offset, a target timing advance command TA corresponding to the second cell.

2. The method according to claim 1, wherein the first information comprises at least one of the following information: the timing offset, an identifier of the second cell, a moment at which the first satellite base station sends the first information, and validity duration of the first information.

3. The method according to claim 2, wherein a unit of the timing offset is any one of the following: a second, a millisecond, a microsecond, a frame, a subframe, a slot, and a sampling point.

4. The method according to any one of claims 1 to 3, wherein a satellite base station to which the second cell belongs is the first satellite base station.

5. The method according to any one of claims 1 to 4, wherein a satellite base station to which the second cell belongs is a second satellite base station different from the first satellite base station.

6. A communication method, applied to a second communication apparatus, wherein the method comprises:
broadcasting or multicasting first information in a first cell of the second communication apparatus, wherein the first information indicates a timing offset in terms of time between a second cell and the first cell, and the second cell is a neighboring cell of the first cell.

7. The method according to claim 6, wherein the first information comprises at least one of the following information: the timing offset, an identifier of the second cell, a moment at which the second communication apparatus sends the first information, and validity duration of the first information.

8. The method according to claim 7, wherein a unit of the timing offset is any one of the following: a second, a millisecond, a microsecond, a frame, a subframe, a slot, and a sampling point.

9. The method according to any one of claims 6 to 8, wherein a satellite base station to which the second cell belongs is the second communication apparatus.

10. The method according to any one of claims 6 to 8, wherein a satellite base station to which the second cell belongs is a second satellite base station different from the second communication apparatus.

11. A communication method, applied to a first communication apparatus, wherein the first communication apparatus accesses a first cell of a first satellite base station, and the method comprises:
obtaining a target random access channel RACH resource used when the first communication apparatus initiates a message 1 MSG1 to a second cell;
initiating the MSG1 to the second cell on the target RACH resource;
receiving a message 2 MSG2 sent in response to the MSG1 by a second satellite base station to which the second cell belongs, wherein the MSG2 comprises a target timing advance command TA and a target uplink grant resource that are used when the first communication apparatus sends an MSG3 to the second cell; and
when it is determined that handover from the first cell to the second cell needs to be performed, sending the MSG3 to the second cell based on the target TA and the target uplink grant resource.

12. The method according to claim 11, wherein obtaining the target RACH resource used when the first communication apparatus initiates the message 1 MSG1 to the second cell comprises:
receiving second information broadcast or multicast by the first satellite base station, wherein the second information indicates the target RACH resource used when the first communication apparatus initiates the MSG1 to the second cell; and
initiating the MSG1 to the second cell on the target RACH resource comprises:
receiving third information sent by the first satellite base station, wherein the third information indicates the first communication apparatus to initiate the MSG1 in the second cell; and
initiating the MSG1 to the second cell on the target RACH resource based on an indication of the third information.

13. The method according to claim 12, wherein the second information comprises at least one of the following information: the target RACH resource used when the first communication apparatus initiates the MSG1 to the second cell, an identifier of the second cell, a moment at which the first satellite base station sends the second information, and validity duration of the second information.

14. The method according to claim 12 or 13, wherein the second satellite base station broadcasts fourth information in the second cell by using a system message, wherein the fourth information indicates, to the first communication apparatus located in the second cell, a RACH resource that is incapable of being used to send the MSG1 within a target time period, or the fourth information indicates, to the first communication apparatus located in the second cell, a probability of a RACH resource used to send the MSG1 within a target time period.

15. The method according to any one of claims 11 to 14, wherein the second satellite base station to which the second cell belongs is the first satellite base station.

16. The method according to any one of claims 11 to 14, wherein the second satellite base station to which the second cell belongs is a satellite base station different from the first satellite base station.

17. A communication method, applied to a second communication apparatus, wherein the method comprises:
broadcasting or multicasting second information to a terminal device in a first cell of the second communication apparatus, wherein the second information indicates a target random access channel RACH resource used when the terminal device initiates an MSG1 to a second cell; and
sending third information to the terminal device, wherein the third information indicates the terminal device to initiate the MSG1 in the second cell.

18. The method according to claim 17, wherein the second information comprises at least one of the following information: the target RACH resource used when the terminal device initiates the MSG1 to the second cell, an identifier of the second cell, a moment at which the second communication apparatus sends the second information, and validity duration of the second information.

19. The method according to claim 17 or 18, wherein a second satellite base station to which the second cell belongs is the second communication apparatus.

20. The method according to claim 17 or 18, wherein a second satellite base station to which the second cell belongs is a satellite base station different from the second communication apparatus.

21. A communication apparatus, comprising a processor, wherein the processor is coupled to a memory;
the memory is configured to store program instructions; and
the processor is configured to invoke the program instructions in the memory, to perform the method according to any one of claims 1 to 5.

22. A communication apparatus, comprising a processor, wherein the processor is coupled to a memory;
the memory is configured to store program instructions; and
the processor is configured to invoke the program instructions in the memory, to perform the method according to any one of claims 6 to 10.

23. A communication apparatus, comprising a processor, wherein the processor is coupled to a memory;
the memory is configured to store program instructions; and
the processor is configured to invoke the program instructions in the memory, to perform the method according to any one of claims 11 to 16.

24. A communication apparatus, comprising a processor, wherein the processor is coupled to a memory;
the memory is configured to store program instructions; and
the processor is configured to invoke the program instructions in the memory, to perform the method according to any one of claims 17 to 20.

25. A communication system, comprising the communication apparatus according to claim 21 and the communication apparatus according to claim 22.

26. A communication system, comprising the communication apparatus according to claim 23 and the communication apparatus according to claim 24.

27. A computer-readable medium, wherein the computer-readable medium stores program code for computer execution, and the program code comprises instructions for performing the method according to any one of claims 1 to 5, claims 6 to 10, claims 11 to 16, or claims 17 to 20.

28. A computer program product, wherein the computer program product comprises computer program code, and when the computer program code is run on a computer, the computer is enabled to implement the method according to any one of claims 1 to 5, claims 6 to 10, claims 11 to 16, or claims 17 to 20.
